# EUROPEAN PATENT APPLICATION

(11) **EP 1 858 146 A1**
(43) Date of publication of application: **21.11.2007**
(21) Application number: 04819760.2
(22) Date of filing: 19.11.2004
(51) Int. Cl.: H02M 3/28

(54) **DC-DC CONVERTER**

(30) Priority: 02.12.2003 JP 2003403094
(71) Applicant: Honda Motor Co., Ltd., Tokyo 107-8556 (JP)
(72) Inventor: EGUCHI, Hiroyuki c/o Honda Motor Co.Ltd., Tokyo 107-8566 (JP); SHIMIZU, Motohiro c/o Honda Motor Co.Ltd., Tokyo 107-8566 (JP)
(74) Representative: HOFFMANN EITLE
(86) International application number: PCT/JP2004/017236
(87) International publication number: WO 2005/055407

(57) **Abstract**

To provide a DC-DC converter capable of suppressing switching loss with a simple structure, and capable of enhancing converting efficiency.

An LC resonant circuit 3 is inserted on a secondary side of a transformer 1. If switching means 2 is turned ON or OFF by driving means 4, output can be obtained on the secondary side through the transformer 1. A resonant current frequency detecting means comprises a current detecting current transformer 5 and a frequency detecting unit 6. The resonant current frequency detecting means detects resonant current frequency caused by operation of the LC resonant circuit 3. This frequency is fed back to the driving means. As a result, the driving means 4 turns the switching means 2 ON or OFF at a frequency corresponding to the resonant frequency of the LC resonant circuit 3.

## Description

### TECHNICAL FIELD

The present invention relates to a DC-DC converter, particularly to a DC-DC converter that can suppress switching loss and enhance converting efficiency.

### BACKGROUND ART

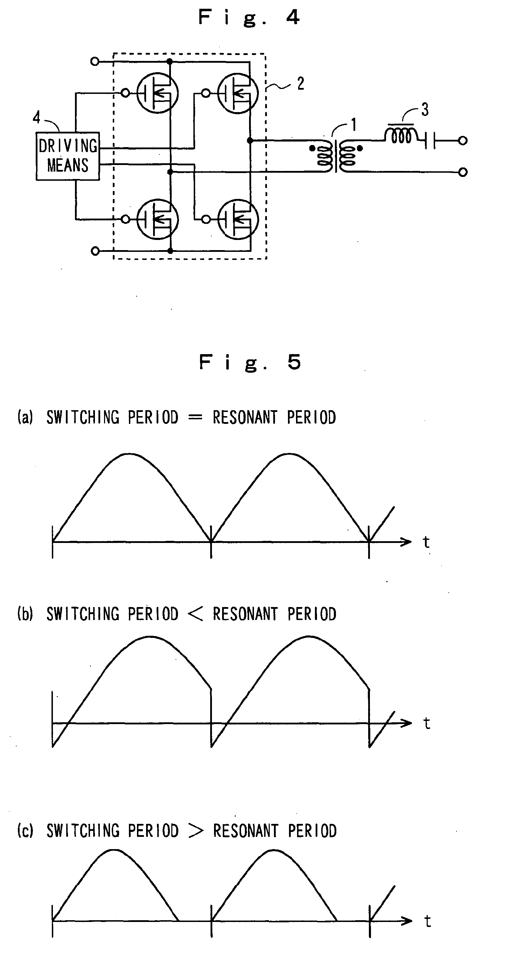

A current-resonant type DC-DC converter is equipped with a resonant circuit connected in series with switching means and turns ON and OFF the switching means at a resonant frequency of the resonant circuit. FIG. 4 shows a principle of the DC-DC converter. On the primary side of a transformer 1, switching means 2 is provided which has a bridge configuration composed of, for example, four switching elements, and on the secondary side thereof, a resonant circuit 3 is provided. The resonant circuit 3 is composed of a resonating choke (reactor) and a resonating capacitor. It is to be noted that on the secondary side, rectifying means and smoothing means, which are not shown though, are further provided.

If the switching means 2 is turned ON or OFF by driving means 4 at a resonant frequency of the resonant circuit 3, a step-up or step-down operation occurs via the transformer 1 at a frequency that corresponds to the frequency at which the switching means 2 has been turned ON or OFF.

In this case, a resonant frequency f of the resonant circuit 3 is given as f=1/2π√LC, supposing inductance of the choke of the resonant circuit 3 to be L and capacitance of the capacitor thereof to be C; so that if L=130µH and C=0.47µF, f≅20.4kHz, for example.

FIG. 5(a) shows a waveform of a current that flows when the switching means 2 is turned ON or OFF at the same frequency as the resonant frequency of the resonant circuit 3, the switching means 2 being turned ON or OFF when the current is reduced to zero.

Element constants (inductance, capacitance) of such elements as the choke and the capacitor composed of the resonant circuit 3 fluctuate and change as time passes by and also with an ambient temperature in accordance with temperature characteristics of the elements. These changes cause a shift between a frequency at which the switching means 2 is turned ON or OFF and a resonant frequency of the resonant circuit 3. This shift occurs also by inductance due to wiring of a circuit interconnection.

FIGS. 5(b) and 5(c) show current waveforms when a resonant period T (T=1/f) of the resonant circuit 3 is made longer and shorter than a switching period of the switching means 2 respectively. As may be clear from these figures, if a shift develops between the turn-ON/-OFF frequency of the switching means 2 and the resonant frequency of the resonant circuit 3, the switching means will not be turned ON or OFF near a zero-crossing point of a resonant current, so that switching loss increases, thus resulting in sufficient performance not being obtained.

The following Patent Literature 1 discloses a technology for eliminating a shift between a driving frequency of switching means and a resonant frequency of a resonant circuit. According to this disclosed technology, a lapse of time during which a resonant current flows through the switching means is calculated based on an input voltage and an output current, so that when a lapse of time that has elapsed from a moment at which the switching means has been turned ON equals this calculated lapse of time, the switching means is turned OFF.
Patent Document 1: JP 2002-58240 A

### DISCLOSURE OF THE INVENTION

### PROBLEM TO BE SOLVED BY THE INVENTION

However, according to a structure disclosed in this Patent Literature 1, an input voltage and an output current or a current flowing through the resonating reactor are detected. Based on the detection result, timing at which a resonant current stops flowing through the switching means is calculated. At that timing, the switching means is switched from an on-state to an off-state, so that it is necessary to accurately detect a lapse of time that has elapsed from a moment when the switching means has been turned ON or OFF, thus resulting in a problem of a complicated configuration required for the accurate detection.

The above-described Patent Literature 1 discloses another structure for detecting a value of a resonant current flowing through a resonating reactor, obtaining a point in time when the resonant current stops flowing through the switching means by using the detected resonant current value, and switching the switching means from the on-state to the off-state at the obtained point in time, which structure also has almost the same problem as the above.

To solve these problems, the present invention has been developed, and it is an object of the present invention to provide a DC-DC converter that can suppress switching loss with a simple structure and enhance converting efficiency.

### MEANS FOR SOLVING PROBLEM

A DC-DC converter comprising: a transformer having primary side terminals, secondary side terminals, a primary side winding, and a secondary side winding and determining a voltage converting ratio, switching means interposed between said primary side terminals and said primary side winding; an LC resonant circuit having a resonating reactor connected in series with said switching means, and a resonating capacitor that resonates with said resonating reactor; and driving means for turning said switching means ON/OFF, wherein: resonant frequency detecting means for detecting a frequency of a resonant current caused by an operation of said LC resonant circuit and means for feeding the frequency detected by said resonant frequency detecting means back to said driving means are provided; and said driving means turns said switching means ON/OFF at a resonant frequency of said LC resonant circuit based on the frequency detected by said resonant frequency detecting means.

The DC-DC converter according to claim 1, wherein said resonant frequency detecting means is provided on the primary side of said transformer.

A bi-directional DC-DC converter comprising: a transformer having low-voltage side terminals, high-voltage side terminals, a low-voltage side winding, and a high-voltage side winding and determining a voltage converting ratio; low-voltage side switching means interposed between said low-voltage side terminals and said low-voltage side winding; high-voltage side switching means interposed between said high-voltage side terminals and said high-voltage side winding; a low-voltage side rectifying element connected in parallel with each of switching elements in said low-voltage side switching means; a high-voltage side rectifying element connected in parallel with each of switching elements in said high-voltage side switching means; and driving means for turning the switching elements ON/OFF in said low-voltage side switching means and the switching elements in said high-voltage side switching means, wherein: an LC resonant circuit is interposed between said high-voltage side winding and said high-voltage side switching means or between said low-voltage side winding and said low-voltage side switching means; resonant frequency detecting means for detecting a frequency of a resonant current caused by an operation of said LC resonant circuit and means for feeding the frequency detected by said resonant frequency detecting means back to said driving means are provided; and said driving means turns said switching means ON/OFF at a resonant frequency of said LC resonant circuit based on the frequency detected by said resonant frequency detecting means.

The DC-DC converter according to claim 3, wherein said LC resonant circuit is interposed between said high-voltage side winding and said high-voltage switching means.

The DC-DC converter according to claim 3, wherein said low-voltage side switching means and said high-voltage switching means are each configured by interconnecting four switching elements in a bridge.

### EFFECT OF THE INVENTION

According to a first feature of the present invention, a driving frequency for the switching means and a resonant frequency of the resonant circuit can always be kept to the same as each other by using a simple structure, so that it is possible to suppress switching loss and enhance switching efficiency. Further, even if element constants of circuit elements of the resonant circuit fluctuate through a stage of manufacturing or change as time passes by or due to an ambient temperature after being incorporated into a DC-DC converter, the driving frequency for the switching means is automatically adjusted to agree with the resonant frequency of the resonant circuit, thereby facilitating designing the circuit and the elements.

According to a second feature of the present invention, resonant frequency detecting means and the driving means can share a common voltage reference line and, therefore, need not be insulated from each other.

According to a third feature of the present invention, low-voltage side switching means and high-voltage side switching means are operated at the same driving timing to enable conversion that accommodate power bi-directionally, in which case switching loss can be suppressed with a simple structure. Further, a current waveform due to switching of the switching means is shaped into a sine wave through an LC resonant circuit and the driving frequency for the switching means is automatically adjusted to agree with the resonant frequency of the LC resonant circuit, so that a turn-OFF timing of a switching element can be kept extremely close to a zero-crossing point of a resonant current. It is thus possible to suppress switching loss greatly.

According to a fourth feature of the present invention, the high-voltage side where the LC resonant circuit is provided has a small value of a current flowing through it, so that loss through the LC resonant circuit can be suppressed.

According to a fifth feature of the present invention, the switching means and a rectifying element on each of the high-voltage and low-voltage sides make up a so-called bridge-type single-phase inverter, so that a structure of a transformer can be simplified. Further, conversion efficiency can be enhanced because it is unnecessary to prolong a short-circuit-preventing dead time for the switching element owing to a lag in transmission through the transformer or reduce a driving time for the switching element.

### BRIEF DESCRIPTION OF THE DRAWINGS

FIG. 1 is a circuit diagram showing a principle of a DC-DC converter related to the present invention;
FIG. 2 is a specific circuit diagram showing an embodiment of the DC-DC converter related to the present invention;
FIG. 3 is a circuit diagram showing an example where the present invention is applied;
FIG. 4 is a diagram showing a principle of another DC-DC converter; and
FIGS. 5 (a) - (c) are a current waveform chart showing operations of the DC-DC converter.

### DESCRIPTION OF THE REFERENCE NUMERALS

1...transformer, 1-1...low-voltage side winding, 1-2...high-voltage side winding, 2,9...switching means, 2-1^{~}2-4,9-1^{~}9-4...FET, 3...resonant circuit, 4...driving means, 5...resonant current detecting current transformer, 6...frequency detecting unit, 7-1,7-2...low-voltage side terminal, 8-1, 8-2...high-voltage side terminal, 10, 11...capacitor, 12...generator, 13...battery, 14...driving inverter (rectifying circuit), 15...regulator, 16...inverter, 100...bi-directional DC-DC converter

### BEST MODE FOR CARRYING OUT THE INVENTION

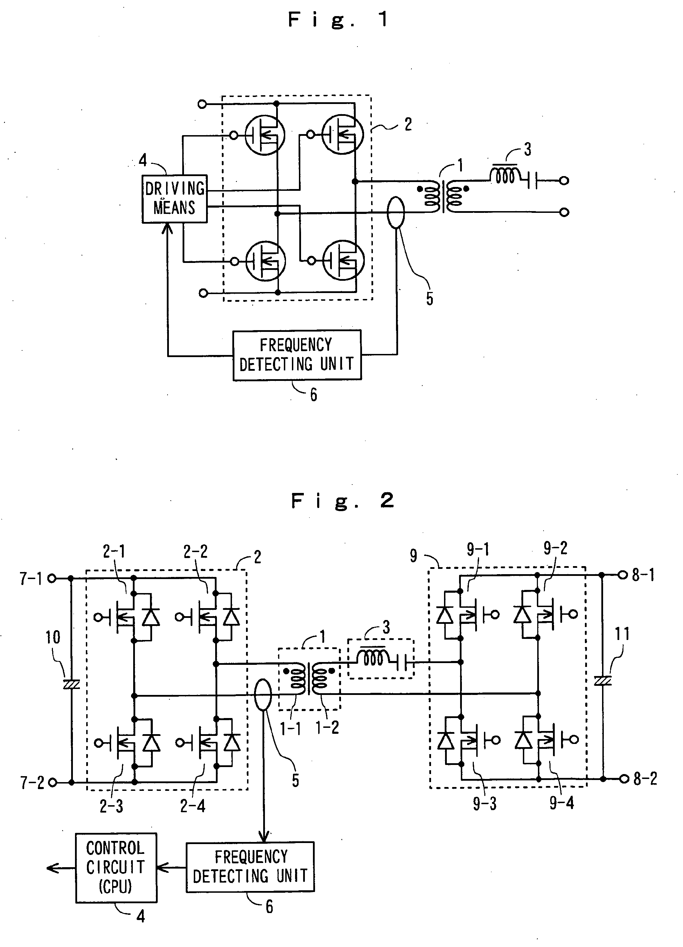

The present invention will be described below with reference to drawings. FIG. 1 is a circuit diagram showing a principle of a DC-DC converter related to the present invention. In the following, the same components as those of FIG. 4 or similar components are indicated by the same reference numerals. FIG. 1 is different from FIG. 4 in that resonant current frequency detecting means which detects a frequency of a resonant current due to operations of a resonant circuit 3 is provided so that a frequency detected by this means may be fed back to driving means 4. The resonant current frequency detecting means is composed of a resonant current detecting current transformer 5 arranged on a line through which, for example, a resonant current on the primary side of a transformer 1 flows and a frequency detecting unit 6 for detecting a frequency of a resonant current detected by this transformer 5.

Next, operations of FIG. 1 are described. First, the driving means 4 turns the switching means 2 ON or OFF at a resonant frequency that has been set on the basis of element constants of circuit elements of the resonant circuit 3. In such a manner, DC-DC conversion is carried out from the primary side to the secondary side of the transformer 1.

The resonant current detecting current transformer 5 detects a current flowing through a winding on the primary side of the transformer 1 as a voltage value and the frequency detecting unit 6 detects a frequency of the current by calculating this frequency from a change in voltage value thus detected. The frequency detected by the frequency detecting unit 6 is fed back to the driving means 4.

The driving means 4 turns the switching means 2 ON or OFF based on a frequency detected by the frequency detecting unit 6. The switching means 2 is thus turned ON or OFF at an actual resonant current frequency detected by the frequency detecting unit 6, that is, a frequency that corresponds to the current actual resonant frequency of the resonant circuit 3. Therefore, even if the element constants of the circuit elements of the resonant circuit 3 fluctuate through a stage of manufacturing or change as time passes by or due to an ambient temperature after being incorporated into the DC-DC converter, a shift between a turn-ON/-OFF frequency of the switching means 3 and the resonant frequency of the resonant circuit 3 is suppressed.

FIG. 2 is a specific circuit diagram showing an embodiment of the DC-DC converter related to the present invention. The present embodiment is an example where it has been configured as a bi-directional DC-DC converter in which power is accommodated bi-directionally between a DC power source connected between low-voltage side terminals 7-1 and 7-2 and a DC power source connected between high-voltage side terminals 8-1 and 8-2 through the transformer 1. In the following, the side of the low-voltage side terminals 7-1 and 7-2 may be referred to as the primary side and the side of the high-voltage side terminals 8-1 and 8-2 maybe referred to as the secondary side in some cases.

The transformer 1 includes a low-voltage side winding 1-1 on the primary side and a high-voltage side winding 1-2 on the secondary side. A step-up ratio of this bi-directional DC-DC converter is determined by a winding ratio between the low-voltage side winding 1-1 and the high-voltage side winding 1-2. The low-voltage side switching means 2 is interposed between the low-voltage side terminals 7-1 and 7-2 and the low-voltage side winding 1-1, while high-voltage side switching means 9 is interposed between the high-voltage side terminals 8-1 and 8-2 and the high-voltage side winding 1-2.

The low-voltage side switching means 2 can be configured by interconnecting four switching elements (hereinafter written as FETs) 2-1 through 2-4 such as FETs in a bridge and the high-voltage side switching means 9 can also be configured by interconnecting four FETs9-1 through 9-4 in a bridge.

The FETs2-1 through 2-4 and 9-1 through 9-4 are each connec ted in parallel with a rectifying element such as a diode. Such a rectifying element maybe either a FET-parasitic diode or a separately connected junction diode. Together with the parallel-connected rectifying elements, the low-voltage side switching means 2 and the high-voltage side switching means 9 can each be thought of as a switching/rectifying unit.

Between the high-voltage side terminals 8-1 and 8-2 and the high-voltage side winding 1-2, the LC resonant circuit 3 is interposed. The FETs 2-1 through 2-4 in the low-voltage side switching means 2 and the FETs 9-1 through 9-4 in the high-voltage side switching means 9 are turned ON or OFF by a control circuit 4 composed of a CPU or the like. It is to be noted that a capacitor 10 connected between the low-voltage side terminals 7-1 and 7-2 and a capacitor 11 connected between the high-voltage side terminal 8-1 and 8-2 are output smoothing capacitors.

The resonant current detecting current transformer 5 is interposed between the low-voltage side winding 1-1 in the transformer 1 and the low-voltage side switching means 2, and output detected by the transformer 5 is supplied to the frequency detecting unit6. The current detecting current transformer 5 and the frequency detecting unit 6 constitute the resonant current frequency detecting means.

The control circuit 4 composed of the CPU and the like turns ON and OFF the FETs 2-1 through 2-4 in the low-voltage side switching means 2 and the FETs 9-1 through 9-4 in the high-voltage side switching means 9, based on a frequency detected by the frequency detecting unit 6. It is to be noted that the frequency detecting unit 6 can be configured also by software as part of the control circuit 4 and a frequency can be detected by deciding a shift in specific position such as a peak position of a resonant current waveform, for example.

Operations of FIG. 2 are schematically described. First, to supply power from the primary side (left side in the figure) to the secondary side (right side in the figure), a pair of the FETs 2-1 and 2-4 and a pair of the FETs 2-2 and 2-3 in the low-voltage side switching means 2 are turned ON and OFF alternately. A current caused by the turn-ON/OFF operations flows through the low-voltage side winding 1-1.

A current induced into the high-voltage side winding 1-2 is input via the LC resonant circuit 3 into the high-voltage side switchingmeans 9 to be rectified by the rectifying elements connected in parallel with the FETs 9-1 through 9-4 and smoothed by a smoothing capacitor 11 and output. In this case, the currents flowing on the primary side and the secondary side are shaped into a sine wave owing to the presence of the LC resonant circuit 3.

A feedback function due to the resonant current frequency detecting means composed of the current detecting current transformer 5 and the frequency detecting unit 6 causes the FETs 2-1 through 2-4 in the low-voltage side switching means 2 to be turned ON/OFF at a frequency that corresponds to the current actual resonant frequency of the resonant circuit 3.

Although the above operations is performed in the case of supplying power from the primary side to the secondary side, the same operation is also performed in the case of supplying power from the secondary side to the primary side. These operations hold true further with the case of automatically transferring power mutuallybetween the primary side and the secondary side in a condition where they are completely synchronized with each other, that is, they are driven with the same driving signal. In this case, power is transferred with a relative voltage difference between the primary side and the secondary side owing to a transformer's winding ratio.

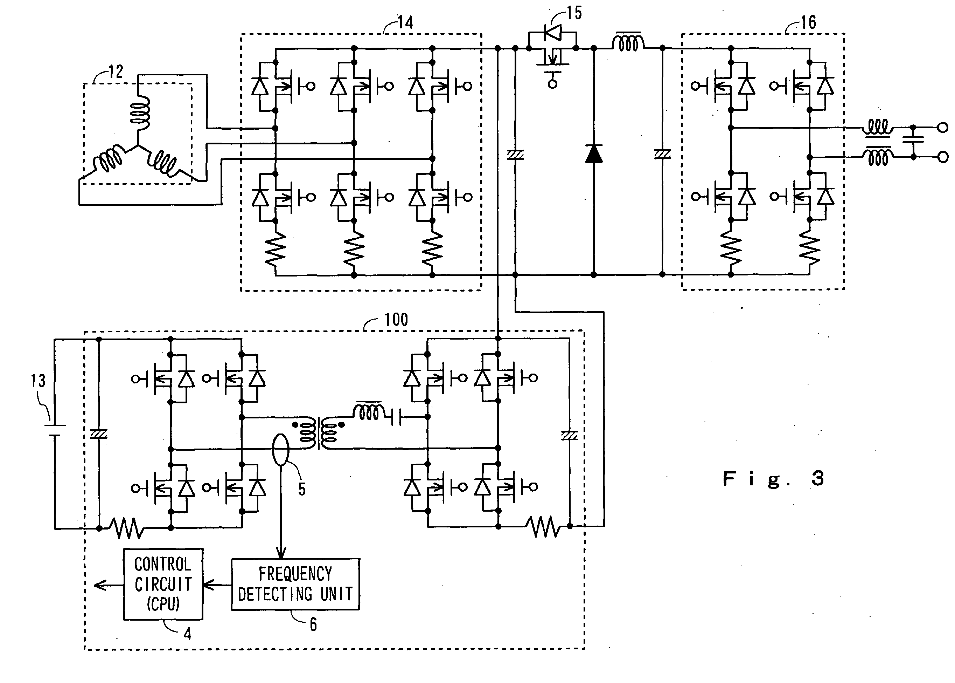

FIG. 3 is a circuit diagram showing an example where the present invention is applied. In the present example, the bi-directional DC-DC converter of FIG. 2 has been applied to a system in which a DC power source including a generator 12 and a battery 13 accommodate power to each other so that power may be supplied to a load. The generator 12 is a three-phase multi-polar magneto-generator of, for example, an engine-driven type.

In the present application example also, the feedback function due to the resonant current frequency detecting means composed of the current detecting current transformer 5 and the frequency detecting unit 6 causes the switching means in the bi-directional DC-DC converter to be turned ON/OFF at a frequency that corresponds to the current actual resonant frequency of the LC resonant circuit, thereby enabling enhancing conversion efficiency.

First, to start an engine, the low-voltage side switching means in a bi-directional DC-DC converter 100 is driven and a resultantly stepped-up DC voltage of the battery 13 is applied to a driving inverter (rectifying circuit) 14. The driving inverter 14 converts the applied DC voltage into a three-phase AC voltage and applies it to the generator 12 to actuate it as an engine-starter generator.

When the engine is started, the generator 12 is driven by the engine, to stop switching of the driving inverter 14. An output of the generator 12 is rectified by the rectifying circuit (driving inverter) 14, regulated by a regulator 15, and converted by the inverter 16 into AC power having a predetermined frequency so that it may be supplied to the load.

If the high-voltage side switching means in the bi-directional DC-DC converter 100 is driven when a voltage of the battery 13 has dropped, it is possible to step down an output of the rectifying circuit 14 by using the bi-directional DC-DC converter 100 and charge the battery 13 with the stepped-down voltage.

When the generator 12 is being driven by the engine, it is possible to drive the low-voltage side switching means and the high-voltage side switching means in the bi-directional DC-DC converter 100 in a condition where they are completely synchronized with each other. It is thus possible to automatically transfer power mutually between the rectifying circuit (driving inverter) 14 side and the battery 13 side in accordance with a relative voltage difference between the primary side and the secondary side owing to a transformer's winding ratio. Further, inthiscase, there occurs only loss due to a turn-ON resistance of the switching means without loss due to a forward voltage drop (about 0.7V) through the diode, so that the efficiency canbe enhanced particularly on the low-voltage side.

Although in the present application example the DC power source made of an engine-driven generator and the battery have accommodated power to each other, the present invention is not limited to this and can be applied also to a case where power is accommodated between appropriate DC power source systems such as a battery, an ordinary generator, a solar energy generator, a wind power generator, or a fuel cell, for example, power is transferred mutually between a traveling power system and an electrical security component system in a hybrid vehicle.

Al though the embodiments have been described above, the present invention can be modified variously. Forexample, a resonant current can be detected also by inserting a resistor in place of a resonant current detecting current transformer into an line through which a resonant current flows. Further, the current detecting current transformer or the resistor can be provided on the secondary side instead of the primary side and the LC resonant circuit can also be provided on the primary side not on the secondary side.

## Claims

1. A DC-DC converter comprising:
a transformer having primary side terminals, secondary side terminals, a primary side winding, and a secondary side winding and determining a voltage converting ratio;
switching meansinterposed betweensaid primarysideterminals and said primary side winding; an LC resonant circuit having a resonating reactor connected in series with said switching means, and a resonating capacitor that resonates with said resonating reactor; and
driving means for turning said switching means ON/OFF, wherein:
resonant frequency detecting means for detecting a frequency of a resonant current caused by an operation of said LC resonant circuit and means for feeding the frequency detected by said resonant frequency detecting means back to said driving means are provided; and
said driving means turns said switching means ON/OFF at a resonant frequency of said LC resonant circuit based on the frequency detected by said resonant frequency detecting means.

2. The DC-DC converter according to claim 1, wherein said resonant frequency detecting means is provided on the primary side of said transformer.

3. A bi-directional DC-DC converter comprising:
a transformer having low-voltage side terminals, high-voltage side terminals, a low-voltage side winding, and a high-voltage side winding and determining a voltage converting ratio;
low-voltage side switchingmeans interposed between said low-voltage side terminals and said low-voltage side winding;
high-voltage side switching means interposed between said high-voltage side terminals and said high-voltage side winding;
a low-voltage side rectifying element connected in parallel with each of switching elements in said low-voltage side switching means;
a high-voltage side rectifying element connected in parallel with each of switching elements in said high-voltage side switching means; and
driving means for turning the switching elements ON/OFF in said low-voltage side switching means and the switching elements in said high-voltage side switching means, wherein:
an LC resonant circuit is interposed between said high-voltage side winding and said high-voltage side switching means or between said low-voltage side winding and said low-voltage side switching means;
resonant frequency detecting means for detecting a frequency of a resonant current caused by an operation of said LC resonant circuit and means for feeding the frequency detected by said resonant frequency detecting means back to said driving means are provided; and
said driving means turns said switching means ON/OFF at a resonant frequency of said LC resonant circuit based on the frequency detected by said resonant frequency detecting means.

4. The DC-DC converter according to claim 3, wherein said LC resonant circuit is interposed between said high-voltage side winding and said high-voltage switching means.

5. The DC-DC converter according to claim 3, wherein said low-voltage side switching means and said high-voltage switching means are each configured by interconnecting four switching elements in a bridge.
